# EUROPEAN PATENT APPLICATION

(11) **EP 1 351 174 A1**
(43) Date of publication of application: **08.10.2003**
(21) Application number: 01974798.9
(22) Date of filing: 11.10.2001
(51) Int. Cl.: G06F 17/60

(54) **SEARCH SUPPORTING APPARATUS, SEARCH SUPPORTING SYSTEM, OPERATION INSTRUCTING TERMINAL, SEARCH SUPPORTING METHOD, AND OPERATION INSTRUCTING SYSTEM**

(30) Priority: 12.01.2001 JP 2001005101; 12.01.2001 JP 2001005102; 28.02.2001 JP 2001055519
(71) Applicant: Secom Co., Ltd., Tokyo 150-0001 (JP)
(72) Inventor: OSAKA, Nobuo, c/o SECOM CO., LTD., Mitaka-shi, Tokyo 181-8521 (JP); HAMANO, Katsutoshi, c/o SECOM CO., LTD., Mitaka-shi, Tokyo 181-8521 (JP); NAKAMURA, Toshinori, c/o SECOM CO., LTD., Mitaka-shi, Tokyo 181-8521 (JP)
(74) Representative: Heim, Hans-Karl, Dipl.-Ing.
(86) International application number: JP0108949
(87) International publication number: WO02057976

(57) **Abstract**

A search supporting device, a search supporting system, an operation instructing terminal, a search supporting method, and an operation instructing system, which can support a quick search and can improve the security of a command. A center-side device (2) holds the present position of a transmission terminal (1) carried by a person to be sought. A search terminal (3) inquires the center-side device (2) of the present position of the transmission terminal (1), acquires the present position of the search terminal (3), and synthesizes, displays the information on a map, and draws a vector diagram from the present position of the search terminal (3) to the position of the sought person. Moreover, the search terminal (3) receives the operation instruction, stores its, and presents it to the person in charge of the operation. This search terminal (3) measures the lapse of time from a predetermined registration for a site device (4), and erases the stored operation instruction after the lapse of a predetermined time. When the search terminal (3) is lost, moreover, the center-side device (2) transmits an instruction to erase the stored content to the search terminal (3).

## Description

### TECHNICAL FIELD

The present invention relates to a. search supporting apparatus for supporting search of a person who has wandered off or lost child etc., a search supporting system, an operation instructing terminal for an operation manager acquiring an operating instruction from a center outside a company, a search supporting method and an operation instructing system for transmitting an operation instruction to the operation instructing terminal.

### BACKGROUND ART.

In recent years, position detection systems using systems such as GPS (Global Positioning System) and PHS (Personal Handyphone System) have been developed and put into operation. Specifically, a system using PHS estimates a rough position of a PHS device owned by a person being sought such as a lost child etc. depending on which base station the PHS device establishes communication with. Generally, a communicable range of a PHS base station is about 150m, so a range of 150m around the base station establishing communication is searched. On the others hand, with GPS, since it is possible to acquire information of geographic coordinates, it is possible to specify the position of a sought person more accurately.

Then, with PHS, for example, the position of the sought person is displayed by composite display of information representing the position of a sought person on a map that has been prepared in advance, using a fax or a map information server on the internet.

On the other hand, it is common practice for an operations manager for carrying out operations outside a company, for example an operative at a security company, to receive operation instructions in a vehicle using a portable phone or radio and to commence handling operations.

A center side manager who gives operating instructions to this operations manager ascertains operating conditions and current position of each operative and determines a suitable operations manager with a relationship to position of a handling operation scene to convey instructions.

However, with the above described conventional method for representing positional information of a sought person, relative interaction with a search manager managing a search is not clear and the search manager moves himself little by little while confirming current position on a map, so visibility is low.

Also, depending on the scale of the map, the position of the person managing the search and the sought person are not displayed on the same map, and it is then not possible to rapidly ascertain which direction to move in.

Also, with respect to search staff managing a search, since specific information characterizing the sought person is not transmitted, even if the search staff are close to the sought person, specification of the sought person is difficult in places where there are a lot of people, such as a shopping center etc. In order to transmit information characterizing the sought person to the.search staff, it can be considered to provide information to the search staff by including personal information of the sought person (information such as name, age, height, portrait photograph etc.) as well as the position of the sought person. Provision of this sort of information can be carried out using a server computer or the like and using known communication technology.

However, when it is in a state where it is possible to provide personal information about the sought person to the search staff in this way, there is a problem that security for the personal information is lowered by illegal access or accidental access to the server computer.

Also, even if position information and personal information about the sought person is only sent to the operation manager's terminal, in cases such as this operation instructing terminal being stolen it may be placed in a state where information relating to handling operations, for example, current position of handling operations and information relating to privacy of an individual, such as a photograph can be looked at.

The present invention has been conceived in view of the above described circumstances, and provides a search supporting apparatus, a search supporting system, an operation instructing terminal, a search supporting method and an operation instructing system that improve visibility, can support quick and efficient searching, and can improve security of provided information.

### DISCLOSURE OF THE INVENTION

In order to solve the above described problems of the related art, the present invention is a search supporting apparatus, and comprises means for acquiring current position information of a search manager, means for acquiring current position information of a person being sought, and means for composing and displaying a relative positional relationship of the search manager and the sought person on a map based on the current position information of the search manager and the sought person.

Also, in this search supporting apparatus, information based on a relative positional relationship of the search manager and the sought person is preferably search guidance information from the current position of the search manager to the sought person. Means for calculating a relative distance between the search manager and the sought person are also provided, the relative distance is preferably displayed as the relative positional relationship.

As the search guidance information, it is possible to have a vector map to the current position of the sought person from the current position of the search manager, or to have a map representing a route.

In an aspect of the present invention, the means for displaying the map selectively displays a reduced scale map in accordance with the relative positional relationship from a plurality of maps of differing scale. In this manner, the positional relationship between the search manager and the sought person is clearly displayed on a single map, and it is possible to rapidly ascertain direction to search in.

It is also preferable to provide means for detecting the direction in which the search supporting device of the present invention is facing, and means for displaying information regarding this direction on the map. In this manner, it is possible to rapidly discern a direction to go in, and visibility is improved.

The present invention for solving the above described problems of the related art is also directed to a search supporting system comprising a transmission terminal, carried by a person being sought, for transmitting positional information of the sought person, a center side device for receiving positional information of the sought person from the transmission terminal and providing the positional information, and a search terminal owned by a search manager, the search terminal comprising means for making an inquiry to the center side device for positional information of the sought person, means for receiving positional information provided in response to the inquiry, means for acquiring information of the current position of the search terminal, and means for displaying a relative position relationship based on received positional information of the sought person and information of the current position of the search terminal.

Here, the center side device or the search terminal include means for managing a history of position information for the sought person, and the search terminal preferably displays a movement locus of the sought person using the managed history.

Also, the means for displaying a relative position of the search terminal preferably displays current position of the sought person with an image of specified area based on information relating to errors in positional information of the transmission terminal set in advance.

Another aspect of the present invention for solving the above described problems of the related art is a search supporting method, comprising the steps of acquiring current position of a search manager, acquiring current position of a person being .sought, and composing and displaying arrows from the search manager to the sought person on a map based on the current positions of the search manager and the sought person.

Another aspect of the present invention for solving the above described problems of the related art is an operation instructing terminal, carried by an operations manager, for receiving an operation instruction and presenting the instruction to the operations manager after a specified registration operation by the operations manager, comprising a storage section for storing received operation instruction content, a timer for clocking a time from the specified registration operation, and a control section for determining whether or not the time clocked by the timer has exceeded a specified time and, if the specified time has elapsed, carrying our erasure processing for information stored in the storage section. In this manner, operation instruction content is erased when specified time has elapsed after a registration operation and security is improved.

Here, the storage section is preferably a so-called volatile memory (a memory where stored content is lost if the power supply is lost).

Another aspect of the present invention for solving -the above described problems of the related art is an operation instructing system comprising a plurality of operation instructing terminals and a center side device for transmitting instruction content to the operation instructing terminals, the operation instructing terminals comprising a storage section for receiving and storing content of an operation instruction from the center side device, means for presenting content of an operation instruction stored in the storage section to an operations manager in response to an operation from the operations manager, and means for performing erasure processing of information stored in the storage section if a signal instructing erasure of information stored in the storage section is received from the center side device, the center side device comprising means for managing missing flags representing loss of each operation instructing terminal, and signal transmission means for transmitting a signal instructing erasure of information to an operation instructing terminal having the missing flag set.

In this operation instructing system, the operation instructing terminal is provided with a timer for clocking elapsed time from a specified operation relating to the center side device, and means for carrying out erasure processing of operation instruction content stored in the storage section when the time clocked by the timer exceeds a specified time set in advance, the center side device having clock means for carrying out timing management for elapsed time from the specified operation of each operation instructing terminal, and the signal transmission means preferably transmits a signal instructing to erase the information to the operation instructing terminal having a missing flag set when the elapsed time from the corresponding specified operation doesn't exceed a specified time set in advance. In this manner, further erase signals are not consecutively transmitted after carrying out erasure of own stored content.

Another aspect of the present invention to solve the above described problems of the related art is an operation instructing system comprising a plurality of operation instructing terminals and a center side device for transmitting instruction content to the operation instructing terminals, wherein the operation instructing terminals comprise means for acquiring operation instruction content from the center side device by accessing the center side device, a storage section for storing the acquired operation instruction content, means for providing operation instruction content stored in the storage section to an operations manager in response to operation from the operations manager, and means for carrying out erasure processing for information stored in the storage section if a signal instructing erasure of information stored in the storage section is received, the center side device comprising means for managing missing flags indicating loss of each operation instructing terminal, and signal transmission means for referring to missing flags corresponding to the operation instructing terminals that are being accessed and, when a flag is set to indicate that a terminal is missing, transmitting a signal instructing erasure of the information to that operation instructing terminal.

Yet another aspect of the present invention for solving the above described problems of the related art is an operation instructing terminal, carried by an operations manager, for acquiring operation instructions from an instruction center side and presenting the operation instructions to the operations manager, comprising a storage section for storing acquired operation instruction content, means for collecting information relating to operating conditions of a terminal, and means for carrying out processing to make it impossible to refer to operation instruction content stored in the storage section if the collected information related to operating conditions satisfies previously set operation stop conditions or if any instruction is acquired from the instruction center.

A still further aspect of the present invention for solving the above described problems of the related art comprises means for carrying out management to affix an identifier to each operation instructing terminal carried by an operations manager after a specified registration operation by the operations manager, means for storing operation content to be executed in relation to an identifier of an operation instructing terminal possessed by an operations manager who will carry out that operation, and means for transmitting an instruction indication to acquire the operation instruction to an operation instructing terminal possessed by the operations manager who will carry out the operation.

Another aspect of the present invention for solving the above described problems of the related art is a search supporting system containing a center side device and a plurality of search supporting devices possessed by each search staff, wherein the center side device comprises means for transmitting a search instruction to a specific search supporting terminal possessed by a search manager selected from among search staff managing a search of a person being sought, and means for providing information about the sought person relating to a received search request in response to a request from the specific search supporting device, and the search supporting devices are set to be capable of requesting information on the sought person if a search instruction is received. It is made possible by including a pass code or encryption key etc. for acquisition of sought person information in a search instruction.

In a still further aspect of the present invention for solving the above described problems of the related art, there is provided a search supporting system comprising a transmitter carried by a sought person, a center side device and a search supporting device possessed by every search manager, wherein the center side device comprises means for holding a plurality of items of information relating to a sought person and respective security levels in a correlated manner, means for receiving current position information of a search supporting device and a request for sought person information from the search supporting device, means for calculating information on a relative positional relationship between a transmitter carried by a sought person and a search supporting device based on current position information of the search supporting device, means for determining a disclosable security level based on the relative positional relationship information, and means for providing information about sought persons up to a security level set as disclosable to a requesting search supporting device based on the determination. In this manner, by not providing some of the information for sought persons until a specified relative positional relationship has been reached it is possible, from among personal information, to provide information for which security is particularly important and information for which security is not particularly important in a distinguishable manner, thus contributing to improved security.

Yet another aspect of the present invention for solving the above described problems of the related art is directed to a search supporting system comprising a center side device, and a plurality of search supporting devices, possessed by every search manager, for acquiring information of persons to be sought from the center side device and providing this information to a search manager, wherein the search support devices are provided with means for storing acquired sought person information, and delete the stored sought person information upon receipt of a search completion instruction from a search manager. In this way, sought person information is deleted together with a search completion input, and an improvement in security can be expected.

A further aspect of the present invention is directed to a search supporting system, comprising a center side device, and a plurality of search supporting devices, possessed by every search manager, for acquiring information of persons to be sought from the center side device and providing this information to a search manager, for transmitting search completion notification information from a search supporting device to the center side device at the time of search completion, wherein the search supporting devices are provided with means for storing acquired sought person information, and if input of search completion is received from a search manager, the sought person information is preferably deleted together with transmission of the notification information to the center side device.

In a further aspect of the present invention, in the event that a sought person is searched for by a plurality of search managers in a group, if the center side device receives a search completion instruction from a single search manager within the group, an instruction to delete sought person information stored in the search supporting devices possessed by the other search managers in the group is transmitted and the search supporting devices receiving the delete instruction preferably delete the stored sought person information.

In these search supporting systems, the sought person information preferably contains image information of a portrait photograph of the sought person.

In a further aspect of the present invention for solving the above described problems of the related art, there is provided a search supporting device possessed by a search manager, comprising means for detecting its own current position, means for acquiring current position of a transmitter carried by a sought person, means for calculating a relative positional relationship of itself and the transmitter based on the detected own current position and the current position of the transmitter, means for receiving and storing a plurality of items of information relating to sought persons from a center side together with respective security level attributes, and means for determining disclosable security levels according to the calculated relative positional relationship and providing to a search manager information, among stored information.relating to sought persons, that has been determined as being disclosable. Here, the relative positional relationship can be a relative distance, or a relationship as to whether or not the transmitter and the device belong to the same zone using zone information set in advance.

A yet further aspect of the present invention for solving the above described problems of the related art is a search supporting device, possessed by a search manager, for acquiring and storing information relating to sought persons, and supporting a search by providing the stored information to a search manager, wherein if a search manager inputs a search completion instruction, stored information relating to a sought person is deleted.

### BRIEF DESCRIPTION OF THE DRAWINGS

Fig. 1 is a structural block diagram of a search supporting system of an embodiment of the present invention.
Fig. 2 is a structural block diagram of a center side device 2.
Fig. 3 is a structural block diagram of a search terminal 3.
Fig. 4 is a structural block diagram of a site device.
Fig. 5 is a descriptive drawing showing one example of a data structure containing sought person information and security level information attributes.
Fig. 6 is a descriptive drawing showing an example of setting disclosable levels based on relative distance.
Fig. 7 is a flowchart showing one example of processing of a control section 36.
Fig. 8 is a descriptive drawing showing one example of display on a search terminal 3.
Fig. 9 is a descriptive drawing showing another example of display on a search terminal 3.
Fig. 10 is a flowchart showing another example of processing of the control section 36.

### BEST MODE FOR CARRYING OUT THE INVENTION

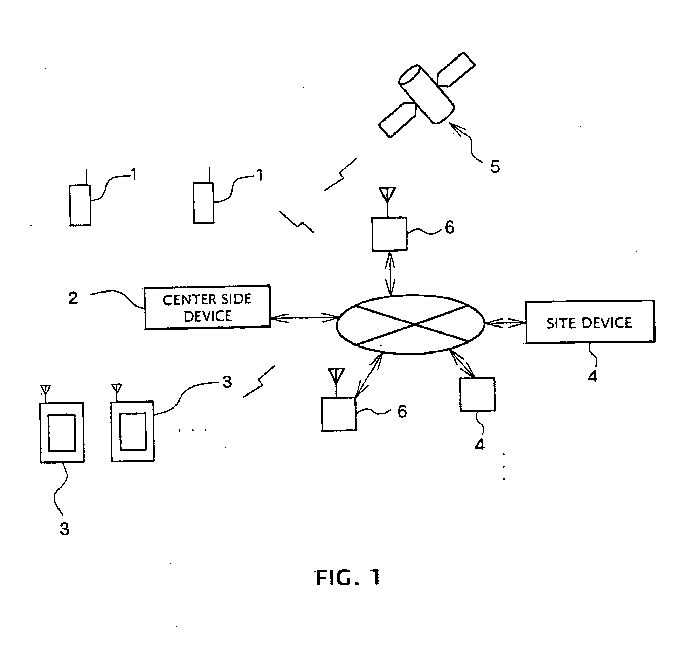

A description will now be given of embodiments of the present invention, with reference to the drawings. A search supporting system of an embodiment of the present invention, as shown in Fig. 1, is basically made up of a transmission terminal 1 carried by a sought person, a center side device 2 positioned in a search center, search terminals (this search terminal is also equivalent to the search supporting device of the present invention) 3 respectively possessed by each search manager, and a site device 4, with these components being connected via a wired or wireless communications network.

The transmission terminal 1 and the search terminal 3 each have a GPS receiving function and a portable telephone communication function, and can receive position information from a GPS satellite 5 as well as carrying out communication to and from a portable telephone base station 6. Also, since position information obtained from the GPS satellite 5 contains an error, this position information is transmitted to a revision server, not shown, via a network, this rectified position information is received by the revision server and transmitted to the center side device 2.

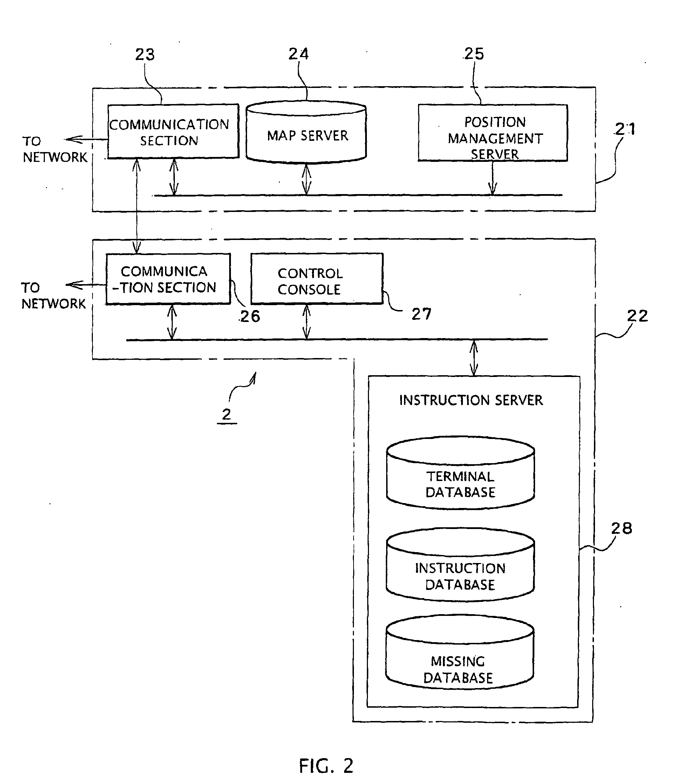

Here, the center side device 2, as shown in Fig. 2, is made up of a position information management section 21 and a control section 22, the position information management section 21 contains a communication section 23, a map server 24 and a position management server 25 mutually connected to a LAN (local area network), while the control section 22 contains a communication section 26, a control console 27 and instruction server 28 connected to the same LAN.

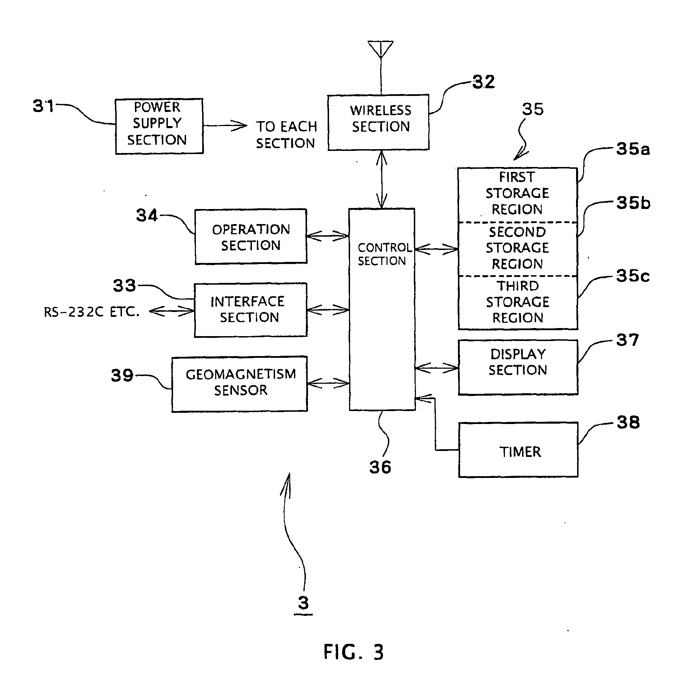

The search terminal 3, as shown in Fig. 3, comprises a power supply section 31, a wireless section 32, an interface section 33, an operation section 34, a storage section 35, a control section 36, a display section 37, a timer 38 and geomagnetism sensor 39. Here, the storage section 35 has a first storage region 35a for storing instruction content, a second storage region 35b as means for storing information of a sought person, and a third storage region 35c. The first and second storage regions 35a and 35b are volatile memory such as DRAM, while the third storage section 35c is a non-volatile memory such as EEPROM. Also, an identifier intrinsic to each terminal (manager identifier) is set in the search terminal 3.

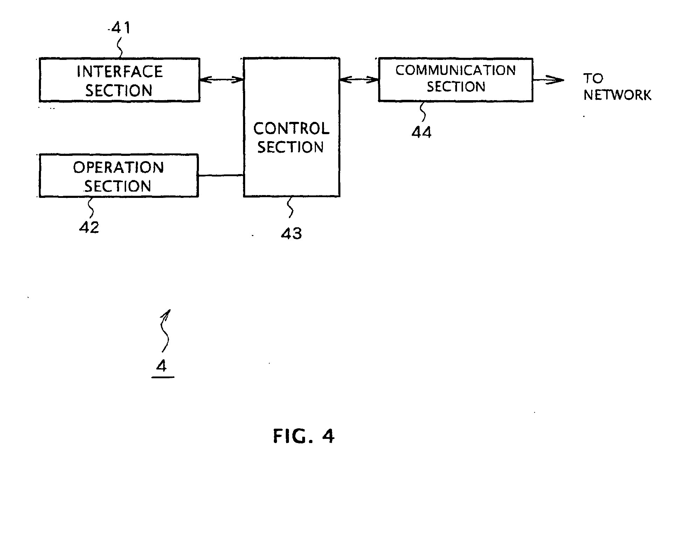

The site device 4, as shown in Fig. 4, is provided with an interface section 41, an operation section 42, a control section 43 and a communication section 44.

The transmission terminal 1 transmits the previously set transmission terminal identifier together with positional information to the nearest portable telephone base station 6 and via a network to the center side device 2 when a position request signal has been received from the center side device 2 or when an emergency button has been operated.

In the position information management section 21 of the center side device 2, a transmission terminal identifier transmitted from the transmission terminal 1 and current position information are received by the communication section 23 via a network, and the communication section 23 outputs the received transmission terminal identifier and the current position information to a position management server 25. Also, this communication section 23 provides current position information etc. of the transmission terminal 1 managed by the position management server 25 in response to an inquiry from a search terminal 3. Here, the case where the transmission terminal 1 uses GPS to notify its own current position has been described as an example, but in the case where the terminal carried by the sought person is PHS or the like, for example, the current position information of that PHS terminal is acquired by this communication section 23 from each PHS provider side. In this case, description of design features such as making communication means of the transmission terminal 1 PHS is omitted.

The map server 24 stores map information image data and vector data of various reduced scale maps are stored in this map server 24. Map data using the vector data can be 'the same data as that used in known car navigation systems etc. Also, this map server 24 receives a request for a particular reduced scale map from a search terminal 3 and transmits data for that reduced scale map to the search terminal 3 originating the request.

The position management server 25 receives input of a transmission terminal identifier and current position information from the communication section 23, adds the current position information to a current position history corresponding to this transmission terminal identifier and stores the new history. Also, in response to an inquiry input from the communication section 23, this position management server 25 carries out processing (position information provision processing) to provide current position information of a transmission terminal 1 that was the subject of an inquiry to the search terminal 3 originating the inquiry, via the communication section 23.

The communication section 26 of the control section 22 is connected so as to be capable of communication with the position information management section 21 and each site device 4. Also, this communication section 26 can communicate with each of the search terminals 3 via a wireless circuit.

The control console 27 is provided with an operation section for input of operation instructions and information for search managers constituting subjects of transmission of the operation instructions, and a display section for displaying various information, and outputs this instruction input content to the instruction server 28. Also, a manager receiving a lost contact for a search terminal 3 performs lost status setting from this control console 27.

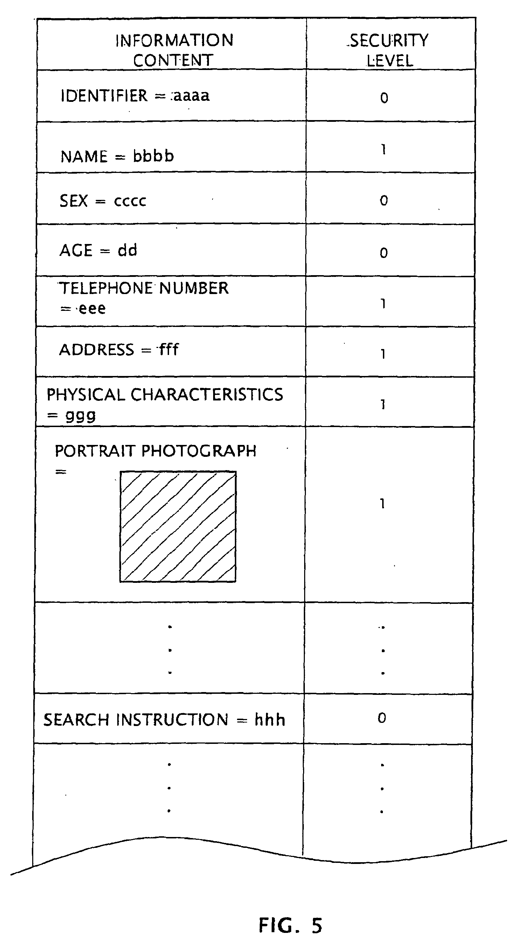

The instruction server 28 comprises a terminal database for correlating terminal identifiers of the search terminals 3 with manager identifiers of search managers possessing the terminals, an instruction database for correlating instruction content for each search manager, and a missing database for storing flags representing whether or not a search terminal 3 has gone missing. This instruction server 28, as shown in Fig. 5, is previously loaded with an identifier and personal information of the person carrying the terminal, such as telephone number, name, image data for a portrait photograph etc., for each transmission terminal 1. This instruction server 28 also has a clock (not shown), and receives input of a manager identifier and a terminal identifier of a search terminal 3 from the site device 4, correlates these items of information and registers them in the terminal database, and references time information indicating the current time and registers this time information together with the correlated information already stored. Also, in response to a request from the site device 4, correlation between a manager identifier and a terminal identifier is deleted from the terminal database.

This instruction server 28 also manages correlation of search instruction content (instruction identifier) and transmission terminal identifier carried by a sought person relating to the instruction for each manager identifier at the time of a search instruction from the control console 27.

The instruction server 28 also receives input of a terminal identifier and information indicating that a search terminal 3 having that terminal identifier has gone missing from the control console 27, and sets a flag correlating with that terminal in the missing database so as to indicate that the terminal has gone missing. In this case, the instruction server 28 attempts to establish a communication link with the search terminal 3 having the terminal identifier set to missing, and if a communication link is established, transmits an instruction to delete the content of the storage regions 35a and 35b, being volatile memory, from the storage section 35 of the search terminal 3, to the search terminal 3. If the instruction to delete the content of the storage regions 35a and 35b to the search terminal 3 having the terminal identifier set to missing is completed, deletion processing is completed. On the other hand, in the event that a communication link is not established, the instruction server 28 references the time and the terminal database, compares time information stored together with the corresponding terminal identifier (information on the time when registration in the database was carried out) with the current time clocked by the clock, and repeats the same processing every fixed period of time until a destruction time has already elapsed from the registration time. In the event that the destruction time has elapsed, since processing to delete the content of the storage regions 35a and 35b will already have been started by the search terminal 3 itself, there is no longer any need to perform the deletion processing.

This instruction server 28 also provides transmission terminal identifier information being correlated to a specified manager identifier and instruction identifier together with security level attributes in response to an inquiry from the position information management section 21. In this case, the instruction server 28 acquires the terminal identifier of the search terminal 3 correlated to the manager identifier or instruction identifier relating to the inquiry. Then, the missing database is referred to, to search for the acquired terminal identifier, and it is confirmed whether or not the missing flag correlating to that terminal identifier indicates missing. If this indicates missing, an instruction to delete content of the storage regions 35a and 35b is then transmitted to the search terminal 3. In this case also, the time and terminal database are referred to and time information stored together with the corresponding terminal identifier (information on the time registration was carried out in the database) is compared with current time information generated by the clock, and if a destruction time has already elapsed from the registration time in order to reduce the processing load on the center side device 2 and utilize channels for transmitting instructions efficiently this transmission processing does not need to be carried out.

The instruction server 28 can also receive a direct inquiry from the search terminal 3, but in this case, various information provision is carried out after authentication of the search terminal 3. At this time also, the terminal identifier of the authenticated search terminal 3 is searched from inside the missing database, and it is one that is set to missing, an instruction to delete content of storage regions. 35a and 35b is transmitted to that search terminal 3.

On the other hand, when the result of referencing the missing database is that a flag indicating missing is not set for the search terminal 3 in question, a manager identifier for the search manager carrying that search terminal 3 is obtained from the manager database. The instruction database is then referenced to search for an instruction related to an instruction identifier in the inquiry among instructions being correlated to the manager identifier. Here, if the instruction identifier is retrieved (namely, when the instruction has been reliably transmitted to the search terminal 3), it is conveyed to the position information management section 21 so that the content of an instruction relating to this instruction identifier is transmitted to the search terminal 3.

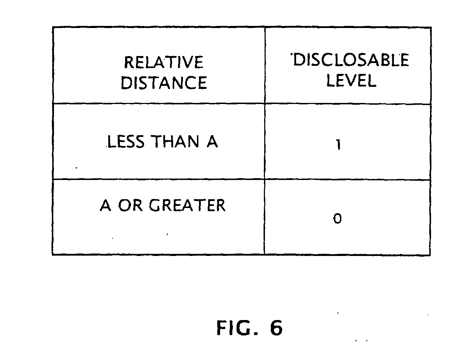

One characteristic feature of this embodiment is that respective security level attributes are set in these items of personal information and search instruction content, transmission terminal identifier and information relating to a sought person called current position of the sought person managed by the position information management section 21. In Fig. 5, a state is shown where level "0" is set for the search instruction content and transmission terminal identifier, while level "1" is set for some of the personal information. The position management server 25 and the instruction server 28 then receive an inquiry together with current position information of the search terminal 3 from the search terminal 3, calculate a relative distance between the current position of the transmission terminal 1 of sought person related to the inquiry and the current position of the search terminal 3 that received the inquiry as a relative positional relationship, and references the relationship between previously set relative distances and disclosable security levels to provide information up to the disclosable security level. Specifically, the relationship between this relative distance and disclosable security level is set as a table such as that shown in Fig. 6. As the minimum required information for a search, the lowest security level (here it is made "0") is preferably set in the current position information of the sought person.

The power supply section 31 of the search terminal 3 is a battery supplying common power to each section of the search terminal 3. That is, if this power supply section 31 is removed, the timer 38 will stop and also no power will be supplied to the storage section 35.

The wireless section 32 transmits data to the center side device 2 via a portable telephone base station 6 in accordance with an instruction input from the control section 36, and outputs data received from the center side device 2 via the portable telephone base station 6 to the control section 36. The wireless section 32 also receives the positional information from a GPS satellite 5 and outputs the information to the control section 36.

The interface section 33 is an interface for connecting to a site device 4, which will be described later, and is actually a serial interface such as RS232C. This interface 33 outputs data input from the site device 4 side to the control section 36. Also, this interface section 33 receives an instruction to start the timer 38 from the site device 4 side, and outputs the instruction to the timer 38. The operation section 34 is a keyboard or pointing device, and can include a touch panel overlaid on the display section 37. This operation section 34 conveys the content of operation by a user to the control section 36.

With in the storage section 35, the storage regions 35a and 35b constituted by volatile memory are initialized and cleared by an instruction input from the control section 36, and writing in and reading out of data is carried out. If these storage regions 35a and 35b that are volatile memory are not provided with power, the stored content is lost. Also, a program to be executed by the control section 36, a terminal identifier registered at the time of initialization, and processing parameters are stored in a storage region 35c, which is non-volatile memory. The display section 37 is actually a liquid crystal display, and upon instruction from the control section 36 displays various data. The timer 38, upon receipt of a start instruction input from the site device 4 via the interface section 33, resets the time and then starts clocking.

The control section 36 writes data received from the site device 4 via the interface section 33 into the storage regions 35a and 35b constituted by volatile memory. This data is data for registration, and includes information such as a password for accessing the center side device 2. Further, the control section 36 deletes the content of the volatile memory storage regions 35a and 35b if an instruction to delete stored information is received from the site device 4, and stops the timer 38.

This control section 36 also recognizes data received by the wireless section 32, and if the received data is information related to a search instruction, the information is written into the volatile memory storage regions 35a and 35b, a search manager is notified and processing (search instruction receive processing) to display search supporting information is executed by an instruction from the searchmanager. Also, if the recognized data is an instruction to delete the content of the volatile memory storage regions 35a and 35b, that instruction is followed to delete the content stored in the storage regions 35a and 35b. Further, when an instruction to acquire an operation instruction is received, the data stored in the non-volatile memory region 35c is referenced, the center side device 2 is accessed, a terminal identifier and password are transmitted and authentication received, and processing to receive corresponding search instructions etc. is carried out. This control section 36 also periodically references the time information clocked by the timer 38, and if this time information exceeds a specified time (hereafter called "destruction time"), carries out processing to delete the content of the volatile memory storage regions 35a and 35b. In the processing to delete these volatile memories 35a and 35b, the control section 36 can delete the entire content stored in the volatile memories 35a and 35b, but it is also possible to set information (data names etc.) specifying data to be deleted as processing parameters in the non-volatile memory 35c at the time of initialization , and to delete only specified data from the volatile memories 35a and 35b in accordance with this information.

This control section 36 also carries out processing to display content stored in the volatile memories 35a and 35b on the display section 37 in accordance with the content of operations input from the operation section 34. The control section 36 also calculates current position information based on GPS signals input from the wireless section 32. Detailed description of the search instruction receive processing performed by the control section 36 will be given later.

The interface section 41 of the site device 4 is specifically a serial interface such as RS232C. The operation section 42 receives operations from an operations manager and outputs them to the control section 43. If the control section 43 is input with a registration operation from the operation section 42, it is confirmed whether or not a search terminal 3 is connected via the interface section 41, and if a terminal is connected, a terminal identifier is acquired from this search terminal 3 together with output of an instruction to start the timer 38 for this search terminal 3. This site device 4 also authenticates the operations manager carrying out the operation, and transmits information (manager identifier) for identifying this operations manager and information for a terminal identifier of the search terminal 3 to the center side device 2 via the communication section 44. Also, if input of an instruction to cancel registration is received as a result of operation by an operations manager, the control section 43 of the site device 4 authenticates the operations manager and confirms whether or not a search terminal 3 is connected via the interface section 41 and if a terminal is connected, a terminal identifier is acquired from this search terminal 3, content stored in the volatile memories 35a and 35b of the storage section 35 is deleted, an instruction to stop the timer 38 (shutdown instruction) is output, the manager identifier and terminal identifier are sent to the center side device 2 and a request to cancel correlation between them is transmitted.

The communication section 44 is connected to the center side device 2 via a network, transmits data input from the control section 43 to the center side device 2 and outputs data received from the center side device 2 to the control section 43.

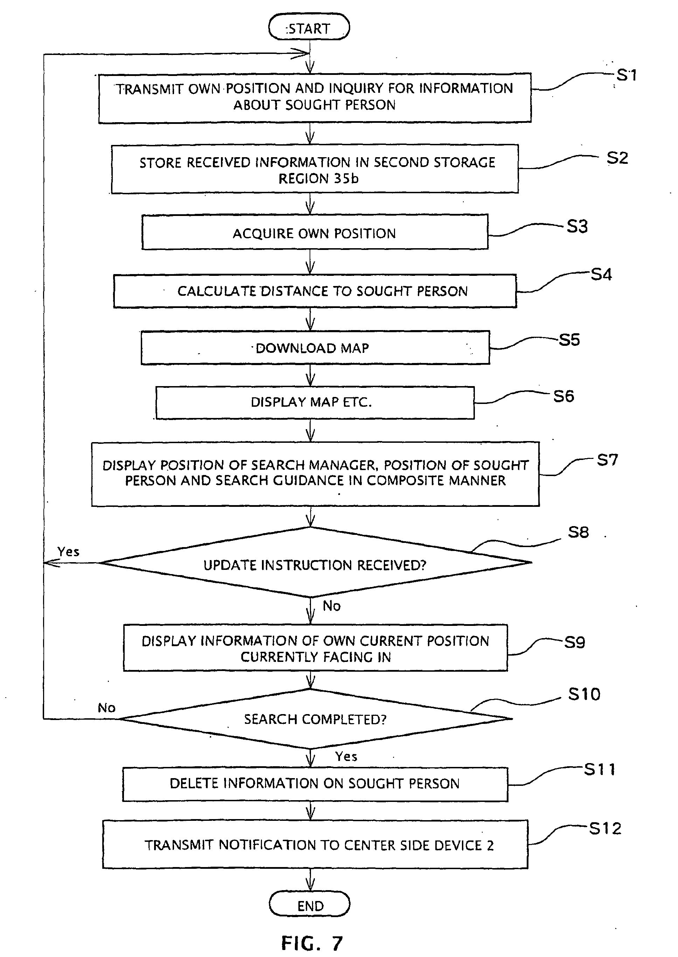

Here, search instruction receive processing performed by the control section 36 of the search terminal 3 will be described with reference to Fig. 7. The control section 35 receives a search instruction containing an instruction identifier from the control section 22 of the center side device 2, then stores content of the instruction in a first storage regions 35a of the storage section 35, displays the content of the instruction on the display section 37 to notify receipt of the instruction, and carries out searching supporting information display processing. Specifically, the control section 36 receives an instruction to acquire position information of a sought person from a search manager via the operation section 34, commences the processing shown in Fig. 7, and transmits the manager identifier being set and the received operation identifier together with a signal making an inquiry for information of a sought person corresponding to this instruction identifier (S1). At this time, if there is already information relating to a distance between a search manager and a sought person that will be described later, this is also transmitted.

The control section 36 then stores information on a sought person received in response to this request in a second storage region 35b of the storage section 35 (S2). Sought person information received here was current position information of the sought person, etc. at first, which was correlated to a lowest security level attribute, but as the distance between the sought person and a search manager becomes smaller, information of a high security level is provided from the center side device 2, for example, personal information on the sought person (a contract identifier of business, or information such as telephone number, name, portrait photograph image data etc.) is stored in the second storage region 35b.

Also, the control section 36 acquires its own current. position based on signals from a GPS satellite 5 received by the wireless section 32, transmits this own position information to a revision server via a portable telephone base station 6, and the position information corrected by the revision server is acquired again (S3). The distance is then calculated from the sought person current position information stored in the processing of S2 and the own current position information acquired in the processing of S3 (S4), and reduced scale map data corresponding to the position and distance is downloaded. from the map server 24 of the position information management section 21 (S5). The control section 36 then displays this downloaded map image information on the display section 37 (S6), and also performs composite display of a mark representing the current position of the sought person on this map, as well as displaying a mark representing the current position of the search manager (specifically, the own current position acquired in the processing of S3) on the same map, as search guidance using a composite display. The control section 36 performs composite display of vector lines (arrows) etc. from the mark representing the current position of the search manager to the current position of the sought person, displays closest distance information calculated in the processing of S4 as additional search guidance (S7), and overlays the display on the mark representing -the own current position.

An instruction to update is then awaited (S8), and if there is an instruction to update (Yes) execution is repeated from processing of S1. Also, if there is no instruction to update (No), the geomagnetism sensor 39 is referenced and information indicating the direction in which the control section 36 itself is facing is displayed using an arrow or the like (S9).

Display of distance information and direction information in the processing of S7 and S9 is preferably not carried out as a result of an instruction from an operation section. Specifically, if the distance between the sought person and the search manager is large, only distance information is displayed, to represent approximate distance and direction, while if the search manager approaches the sought person and a detailed map is displayed, search is made easier by clearly expressing the facing direction by displaying the direction in which the search terminal itself is facing.

When more detailed information has been received relating to the sought person, such as personal information in the processing of S2, the control section 36 notifies the fact that this type of information has been stored in the second storage region 35b of the storage section 35 to a search manager. Also, when there is a display instruction from a search manager, this information is displayed on the display section 37.

The control section 36 checks whether or not there is an instruction input of "search complete" from a search manager (S10), and if there is no completion instruction input (NO) execution is repeated from the processing of S1. Also, if there is a completion instruction input in the processing of S10 (YES), information relating to the sought person whose search is completed is deleted from among the information stored in the second storage region 35b (S11), and at the same time information reporting search completion is transmitted to the center side device 2 (S12) to complete processing.

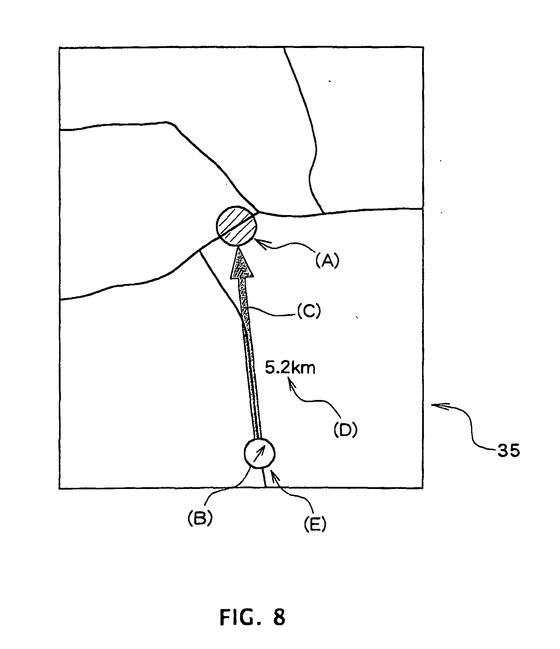

Using the display processing such as that of S7 here, display such as shown in Fig. 8 is performed on the display section 37. Fig. 8 shows the state where position information of a sought person (A), position information of a search manager (B), a vector line representing a relative positional relationship (C), distance information (D) and orientation of the search manager (E) are displayed in a composite manner on a map.

One characteristic feature of this embodiment is that a map at an appropriate scale of reduction is downloaded in the processing of S5. In this way, a relative positional relationship between a sought person and a search manager is clearly defined on the map, and a search is effectively supported.

Also, in order to improve visibility, of the relative positional relationship, it is preferable during display to rotate the map image so that the orientation of the search terminal 3 is aligned with the orientation of a vector line representing the relative positional relationship between the sought person and the search manager. In this way, it becomes possible to intuitively grasp the orientation of the sought person, and usefulness is further improved. Also, the mark (A) representing position information of the sought person is preferably a symbol (for example a circle) having an area related to an error range depending on error information accompanying the method of sensing the current position of the sought person. If, for example, the method of measuring the current position of the sought person is always GPS, a GPS error is stored at the search terminal 3 side, and this is used as the error information. In this embodiment, position information is acquired using GPS and a portable telephone base station 6 and an error is corrected by a revision server, not shown, but it is also possible to manage measurement error information for each transmission terminal 1 in the center side device 2m and transmit this error information to the search terminal 3 side.

Further, the search terminal 3 of this embodiment can have a touch panel overlaid on the display section 37, and scrolling display of the map can be carried out by receiving operations such as touching a pen or the like on the touch panel (lightly tapping the surface). For example, if a place on the display section 37 the right of center is touched, the map image is scrolled to the right, and if a place upwards and to the right of center is touched the map image is scrolled upwards to the right. Also, when a central part of the display section 37 is touched the map is scrolled so that the current position of the sought person is placed at the center and display content is updated. Further, in the description so far a map has been selected having a reduced scale such that the current position of both the search manager and the sought person are displayed in a composite manner on the same map, but it is also possible to update the reduction scale of the map being displayed upon operation by the search manager. Also, temporarily downloaded map information can be cached in the storage section 35. In this case, before downloading map data from the map server 24, the storage section 35 is searched to determine whether or not it is possible to re-use map data that was downloaded previously and cached (whether or not the locality and reduction scale of the cached map data are appropriate), and if the data can be re-used, download processing is stopped and that cached map data is used.

In this embodiment, since the sought person will also move, it is preferable to be able to speculate where they will go to a certain extent. In order to do this, the search terminal 3 of this embodiment acquires current position history information of the transmission terminal 1 stored by the center side device 2 and displays a movement path of the sought person using this history information.

In this case, the position management server 25 of the center side device 2 is provided with a clock, not shown, and when an addition is made to the history of the current position of the transmission terminal 1, it is correlated with time information for the exact time the addition is made using time information clocked by this clock. Then, the search terminal 3 requests information as to how far back history information is required (time condition information) together with position information of the sought person.

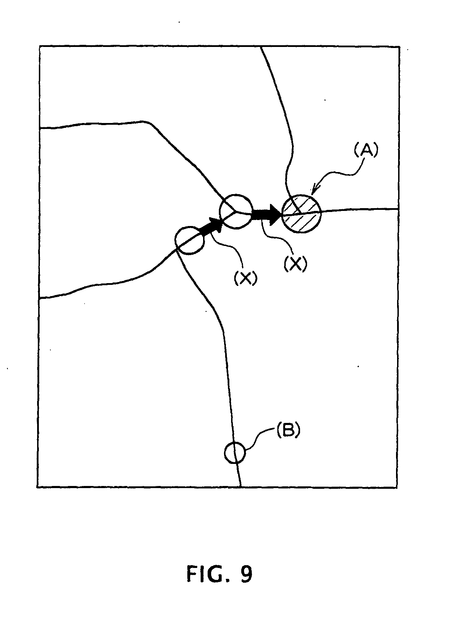

The position management server 25 selects information matching the time condition information from the current position information history in response to this request and transmits this information to the search terminal 3. The search terminal 3 receives this information and displays a movement path (A) of the sought person as shown in Fig. 9. In this display, a mark (B) representing the current position of the search terminal 3 itself and a mark and line drawing representing the movement path (X) are displayed on the map in a composite manner. Here, it is preferable to carry out display by highlighting using a color coding system so that it is easy to see which, among the marks representing the movement path, is the newest current position information.

In Fig. 9, an example has been given where a vector line from the current position of the search manager to the current position of the sought person is not displayed, but it is possible to display this vector line, and it is also possible to display distance and the direction in which the terminal itself is facing.

In the description so far, the position management server 25 receives an inquiry for position information when carrying out position information providing processing and provides position information of the sought person directly, but by using this inquiry together with a received manager identifier and instruction identifier it is also possible to make an inquiry to the instruction server 28 of the control section 22, acquire a transmission terminal identifier for the transmission terminal 1 carried by the sought person correlated to the search manager, and provide current position information related to this transmission terminal identifier, to thereby do away with the need to respond to enquiries from an unrelated search manager, to take into consideration the privacy of the sought person and to deal with cases such as the search terminal 3 being stolen.

Also, in the case where the transmission terminal 1 has a function of emitting a call sound, such as a general purpose PHS, the search terminal 3 can call the PHS using an instruction from the search manager. In this manner, the transmission terminal 1 emits a call sound, and it becomes possible to reliably specify the sought person. That is, even if it is not PHS, the transmission terminal 1 is provided with a sound output section for emitting a specified sound in response to a received signal, and the sound is preferable emitted in response to a signal from a telephone exchange office or the center side device 2. Also, in this case the search terminal 3 transmits a signal instructing emission of the sound to a telephone exchange or center side device 2 in response to a search manager's operation. When the center side device 2 has received this signal, the center side device 2 transmits an instruction to emit the sound to a corresponding transmission terminal 1.

If the search supporting system of this embodiment is used, a transmission terminal 1 is carried in advance by candidate sought persons (children who may become lost, or elderly people in danger of wandering off), and current position information intermittently received from the transmission terminal 1 is stored by the position management server 25 of the center side device 2. If a problem such as a child temporarily getting lost arises, this is ascertained by the center side, a center side manager operates the control console 27 and a search manager possessing a search terminal 3 is selected via the instruction server 28 thus passing a search instruction to that search manager. If this happens, a manager identifier and instruction identifier set in the search terminal 3 of this selected search manager are correlated with a terminal identifier of the transmission terminal 1 carried by the sought person the search instruction concerns.

The search terminal 3 transmits its own current position information and makes an inquiry for information of a sought person. In doing this, the center side device 2 determines a disclosable security level based on a relative distance between current position of this search terminal 3 and current position of the transmission terminal 1 carried by the sought person. At first, since the relative distance is generally large, the disclosable security level is low, and information on current position of a sought person, being the minimum necessary information, is provided.

The search terminal 3 acquires information on the sought person provided in this way using the center side device 2, and extracts information on the position of the sought person contained in this information. The search terminal 3 also looks up its own current position, downloads map information suitable for displaying the sought person position and its own position from the map server 24, and displays each item of information in a composite manner. In this way, the screen as shown in Fig. 8 is displayed on the display section 37 of the search terminal 3, and its own current position and the current position of the sought person are displayed on a single map.

If a separate operation is carried out, information on a movement path of the sought person is acquired and displayed on the display section 37 as shown in Fig. 9. This movement path information is received based on conditions such as, for example, "movement path for the past hour". As this condition, it is possible to use not only temporal conditions, but also geographic conditions such as "movement path within 5 km".

Also, if the search manager reaches the vicinity of the sought person, the relative distance between the search terminal 3 and the transmission terminal 1 becomes small, more information on the sought person is provided from the center side device 2, including, for example, image data of a portrait photograph of the sought person, and the search terminal 3 displays these items of information when instructed. In this manner, the circulation of personal information is minimized, which leads to improved security as well as making it possible to support searching by providing personal information to a search manager as required.

According to this embodiment, as a result of at least either a running time (elapsed time from a registration operation) as a condition related to operating condition of the search terminal 3, or an instruction from the center side device 2 based on setting of a missing state, information relating to content of an instruction or a sought person stored in the search terminal 3 is deleted and reference becomes impossible. Here, as the condition relating to operating conditions, only elapsed time from a registration operation has been exemplified, but if it is possible to acquire current position using information from a GPS (Global Positioning System) satellite 5 etc. It is also possible to set so that content of an instruction being stored is deleted when the current position of the search terminal 3 deviates from a range set in advance.

Also, reference is made impossible by deleting content of the storage regions 35a and 35b constituted by volatile memory within the storage section 35, but it is also preferable to have a structure where if a password that has been set in advance is input, referencing becomes possible again. This can be realized using a method such as encryption of the content of the storage section 35 using a specified key.

Specifically, operation of the search supporting system of this embodiment in a case where the search terminal 3 goes missing, such as the search terminal 3 being stolen, will be described in the following. When a search manager -goes to the site they are attached to when reporting to work, they receive a search terminal 3 inside that site and then connect that search terminal 3 to a site device 4 to perform a registration operation. As a result of this registration operation, correlation of the manager identifier of that operation manager and a terminal identifier of that search terminal 3 is performed, and this is registered in the center side device 2. Also, together with this registration operation, the timer 38 of the search terminal 3 is started.

The search manager goes outside carrying this search terminal 3 and once outdoors receives search instructions from the center side device 2 by wireless. Specifically, if an instruction manager of the center side device 2 distributes operation instructions from the control console 27 to specified operation managers, the instruction server 28 recognizes the corresponding terminal identifier with the manager identifier of that operation manager as a key, and then correlates the instruction identifier, being an identifier of an operation instruction, with the terminal identifier together with transmitting the operation identifier of the operation instruction to the search terminal 3. If this is done, the search terminal 3 transmits the terminal identifier and a password that has been set in advance to the center side device 2 to access the center side device 2, then transmits the instruction identifier and requests the corresponding operation instruction. If the instruction server 28 receives this request, it is checked whether or not a terminal identifier of the search terminal 3 carrying out that request is correlated with an operation identifier, and it is confirmed whether or not the instruction is actually being sent to the search manager carrying that search terminal 3. If this conformation is made, the content of that instruction is transmitted to the search terminal 3. The search terminal 3 then stores the content of this instruction and as has already been described carries out display in response to operation by the search manager.

Here, in cases such as when the search terminal 3 is stolen, or lost by a search manager, if the search manager is able to contact the center the theft is notified to the center. If this happens, a center side search manager operates the control console 27 to set a flag representing the loss to a search terminal 3 carried by the operations manager. In response to this setting, the instruction server 28 repeatedly and periodically transmits an instruction to carry out deletion to search terminals having this flag set until an instruction to delete stored content is conveyed to the missing search terminal 3. Here, if the search terminal 3 receives this instruction, operation content being stored is deleted by this instruction.

Also, in the event that the search terminal 3 can not receive this deletion instruction, if an illegal user who has stolen this search terminal 3 accesses the center side device 2, the center side device 2 references the flag representing loss at the time of that access, and when the flag is set to indicate that it is missing, an instruction to delete stored content is transmitted to the search terminal 3. The search terminal 3 then receives this instruction and that stored content is deleted to make it impossible to reference.

Further, even if none of these instructions is received, if a destruction time (for example 8 hours) elapses from when the timer 38 inside the search terminal 3 is started, this will result in processing being executed to delete the stored content.

As a result of the search terminal 3 carrying out this processing itself in this way, or as a result of the loss being realized by the center side device 2, instruction content and information about the sought person is made impossible to reference which means that it is possible to increase security. Also, according to this embodiment, since content of the instruction is actually only conveyed to the search terminal 3 to be instructed, it is possible to improve security.

In the description so far, description has been given for the case where the center side device 2 judges disclosable information based on position information of the search terminal 3 and the transmission terminal 1, but since there is no problem if the judgment is carried out at the search terminal 3 side, description will be given in the following of processing in the search terminal 3 for this case. In this case, processing in the center side device 2 and processing in the search terminal 3 are slightly different.

Specifically, with the embodiment in this case, if the center side device 2 receives an inquiry for information related to a sought person from the search terminal 3, information relating to the sought person is transmitted to the search terminal 3 regardless of the security level of the information.

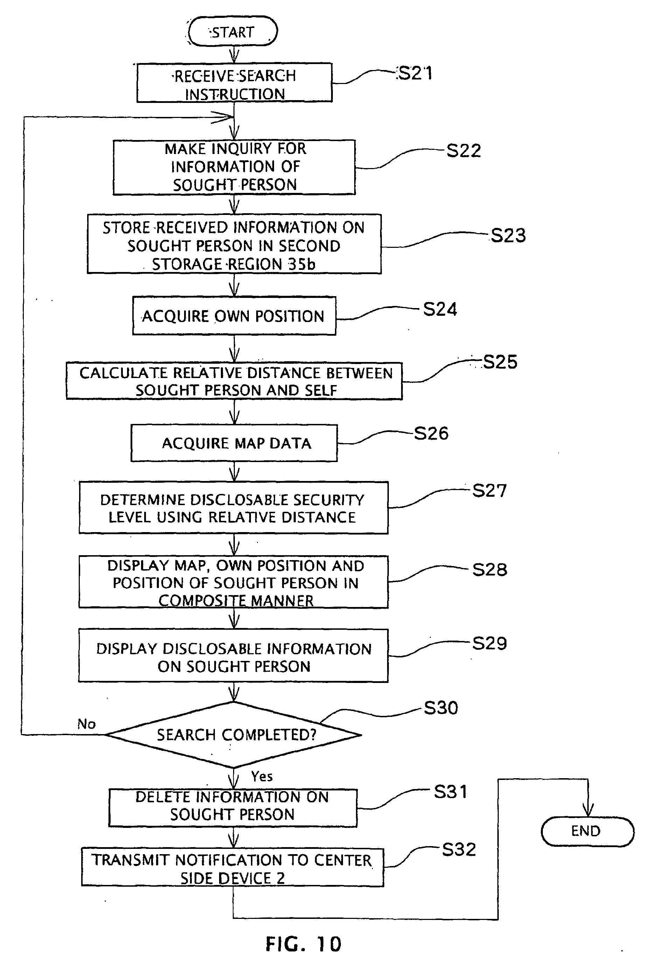

Also, the search terminal 3 carries out the next processing shown in Fig. 10 instead of the processing shown in Fig. 7. Specifically, the control section 36 of the search terminal 3 receives a search instruction including an operation identifier from the control section 22 of the center side device 2 (S21), and together with the received operation identifier transmits a signal inquiring about information on the sought person corresponding to that operation identifier (S22). Then, the control section 36 stores the content of that instruction in the first storage region 35a of the storage section 35, as well as displaying instruction content on the display section 37 to notify receipt of the instruction.

The control section 36 also stores information about -the sought person received in response to the inquiry transmitted in the processing of S22 in the second storage region 35b of the storage section 35 (S23). Here, all of the information on the sought person is received regardless of security level, and stored in the second storage region 35b.

The control section 36 also acquires its own current position based on a signal from a GPS satellite 5 received by the wireless section 32, transmits this own current position information to a revision server via the portable telephone base station 6, acquires position information altered by the revision server again (S24), calculates a relative distance from current position information of the sought person stored in the second storage region 35b and its own current position information acquired in the processing of S24 (S25), and downloads map data at a scale reduction depending on the position and distance from a map server 24 of the position information management section 21 (S26).

The control section 36 refers to relative distance, as the relative positional relationship calculated in the processing of S25, to determine disclosable security level according to the relative distance (S27). This determination can be carried out by referencing a table as shown in Fig. 6, as has already been described. The control section 36 then displays the downloaded map information on the display section 37 as well as displaying a mark representing current position of the sought person on this map in a composite manner and also displays a mark representing current position of the search manager (namely the own current position acquired in the processing of S24) on the same map in a composite manner (S28). Information up to the security level determined as disclosable is also displayed as search guidance in response to an instruction from the search manager (S29).

In the search guidance, besides this type of information there is also composite display of a vector line (such as an arrow), for example, from a mark representing the current position of the search manager to a mark representing the current position of the sought person, on the map and information such as relative distance information and information on the direction in which the search terminal itself is facing acquired by referencing the geomagnetism sensor 33, and the fact that these can be displayed in a composite manner has already been described.

The control section 36 then determines whether or not a search completion instruction has been input (S30), and if there is no input of a completion instruction (NO), processing is repeatedly executed from S22. In this case, by only acquiring the current position information of the sought person, information such as personal information that is not updated regularly is not received again, and it is possible to improve communication efficiency. Also, if there was input of a completion instruction in the processing of S30 (YES), information related to the sought person whose search is completed is deleted from among the information being stored in the second storage region 35b (S31), and at the same time information notifying of search completion is transmitted to the center side device 2 (S32) to complete processing.

In this case also, in order to provide sought person information to only search staff who have actually received the search instruction, information related to access rights for inquiries (information such as search identifier) is included in the search instruction. Deletion processing for content of the storage section 35 in the event of the terminal going missing has already been described.

In the description so far, when the search terminal 3 acquires information from the center side device 2, an encryption key included in the search instruction is transmitted, the center side device 2 decrypts and transmits sought person information, and the search terminal 3 can extract received sought person information using the encryption key included in the search instruction.

Also, in the description above, two stage setting of information determined to have a minimum required security level attribute (security level attribute "0") and information requiring security such as personal information (security level attribute "1") is possible, but among the personal information, for example, it is preferable to have multiple stage settings where the security level of information such as address is set higher than the security level of portrait photo image data (to level "2"). Also, up to now, relative distance has been referenced as relative positional relationship information, but it is also possible to reference whether the searcher and the sought person have entered the same zone as a relative positional relationship based on zone information set in advance. These zones are, for example, a covered range of a base stations such as PHS.

According to this embodiment, there is provided a search supporting device for acquiring current position information of the search manager and current position information of the sought person, and displaying a relative positional relationship of the search manager and the sought person on a map in a composite manner based on current position information of the search manager and the sought person, which means that visibility is improved and it is possible to support a rapid search.

Also, there is a search terminal, carried by a search manager after a specified registration operation by the search manager, for acquiring an instruction from an instruction center side to store the content of the acquired instruction and presenting the content to the search manager, and carrying out deletion processing of the stored content in the event that a specified time has elapsed from the registration operation, it also becomes impossible to reference stored information if the specified time has elapsed and if the terminal goes missing due to theft or the like, and it is possible to improve security.

Further, since a search supporting system is provided in which the center side device manages missing flags indicating that each search terminal has gone missing and transmits an instruction to delete the stored content to a each search terminal having the missing flag set, it is possible to improve security.

Further, since sought person information is only provided to commissioned search staff that have actually received a search instruction (search managers), and provisioning states of the information is controlled using a security level set in advance, it is possible to improve security. Also, since storage of information relating to the sought person is deleted if the search is completed, it is possible to improve security.

Embodiments have been described mainly for the case the present invention to search for a wandering person or the like, but with respect to the-terminal missing processing etc., it is also possible to use the invention as an operation instruction transmission system for situations such as transmitting an operation content instruction to a terminal possessed by a manager.

### INDUSTRIAL APPLICABILITY

The present invention is extremely useful as a system used in order for the police or a security firm to carry out a search for a wandering person or the like, and is also useful as an operation instruction transmission system for situations such as transmitting an operation content instruction to a terminal possessed by a manager.

## Claims

1. A search supporting apparatus, comprising:
means for acquiring current position information of a search manager;
means for acquiring current position information o:f a person being sought; and
means for composing and displaying a relative positional relationship of the search manager and the sought person on a map based on the current position information of the search manager and the sought person.

2. The search supporting apparatus of claim 1, wherein information based on a relative positional relationship of the search manager and the sought person is search guidance information from the current position of the search manager to the current position of the sought person.

3. The search supporting apparatus of claim 1 or claim 2, further comprising means for calculating a relative distance between the current position of the search manager and the current position of the sought person, and wherein the relative distance is displayed as the relative positional relationship.

4. The search supporting apparatus of any one of claim 1 to claim 3, wherein the means for displaying the map selectively displays a reduced scale map in accordance with the relative positional relationship from a plurality of maps of differing scale.

5. The search supporting apparatus of any one of claim 1 to claim 4, further comprising:
means for detecting a direction in which the apparatus is facing; and
means for displaying information regarding the direction on the map.

6. A search supporting system, comprising:
a transmission terminal, carried by a person being sought, for transmitting positional information of the sought person;
a center side device for receiving positional information of the sought person from the transmission terminal and providing the position information; and
a search terminal owned by a search manager,
the search terminal comprising:
means for making an inquiry to the center side device for positional information of the sought person;
means for receiving positional information provided in response to the inquiry;
means for acquiring information of the current position of the search terminal; and
means for displaying a relative positional relationship based on received position information of the sought person and information of the current position of the search terminal.

7. The search supporting system of claim 6, wherein the center side device or the search terminal includes means for managing a history of position information for the sought person, and the search terminal displays a movement locus of the sought person using the managed history.

8. The search supporting system of claim 6 or claim 7, wherein the means for displaying a relative position of the search terminal displays current position of the sought person as an image having an area related to information relating to errors in positional information of the transmission terminal set in advance.

9. A search supporting method, comprising the steps of:
acquiring current position of a search manager:
acquiring current position of a person being sought; and
composing and displaying arrows from the search manager to the sought person on a map based on the current positions of the search manager and the sought person.

10. An operation instructing terminal, carried by an operations manager, for receiving an operation instruction and presenting the instruction to the operations manager after a specified registration operation by the operations manager, comprising:
a storage section for storing received operation instruction content;
a timer for clocking a time from the specified registration operation; and
a control section for determining whether or not the time clocked by the timer has exceeded a specified time and, if the specified time has elapsed, carrying our erasure processing for information stored in the storage section.

11. An operation instructing system, comprising a plurality of operation instructing terminals and a center side device for transmitting instruction content to the operation instructing terminals,
the operation instructing terminals comprising:
a storage section for receiving and storing content of an operation instruction from the center side device;
means for presenting content of an operation instruction stored in the storage section to an operations manager in response to an operation from the operations manager; and
means for performing erasure processing of information stored in the storage section if a signal instructing erasure of information stored in the storage section is received from the center side device,
the center side device comprising:
means for managing missing flags representing loss of each operation instructing terminal; and
signal transmission means for transmitting a signal instructing erasure of information to an operation instructing terminal having the missing flag set.

12. The operation instructing system of claim 11, wherein:
the operation instructing terminal is provided with a timer for clocking elapsed time from a specified operation relating to the center side device, and means for carrying out erasure processing of operation instruction content stored in the storage section when the time clocked by the timer exceeds a specified time set in advance;
the center side device comprises clock means for carrying out timing management for elapsed time from the specified operation of each operation instructing terminal; and
the signal transmission means transmits a signal instructing to erase the information to the operation instructing terminal having a missing flag set when the elapsed time from the corresponding specified operation does not exceed a specified time set in advance.

13. An operation instructing system, comprising a plurality of operation instructing terminals and a center side device for transmitting instruction content to the operation instructing terminals, wherein
the operation instructing terminals comprise:
means for acquiring operation instruction content from the center side device by accessing the center side device;
a storage section for storing the acquired operation instruction content;
means for providing operation instruction content stored in the storage section to an operations manager in response to operation from the operations manager; and
means for carrying out erasure processing for information stored in the storage section if a signal instructing erasure of information stored in the storage section is received from the center side device, and
the center side device comprises:
means for managing missing flags indicating loss of each operation instructing terminal; and
signal transmission means for referring to missing flags corresponding to the operation instructing terminals that are being accessed and, when a flag is set to indicate that a terminal is missing, transmitting a signal instructing erasure of the information to that operation instructing terminal.

14. An operation instructing terminal, carried by an operations manager, for acquiring operation instructions from an instruction center side and presenting the operation instructions to the operations manager, comprising:
a storage section for storing acquired operation instruction content;
means for collecting information relating to operating conditions of a terminal; and
means for carrying out processing to make it impossible to refer operation instruction content stored in the storage section if the collected information related to operating conditions satisfies previously set operation stop conditions or if any instruction is acquired from the instruction center.

15. A search supporting system containing a center side device and a plurality of search supporting devices possessed by each search staff, wherein:
the center side device comprises:
means for transmitting a search instruction to a specific search supporting terminal possessed by a search manager selected from among search staff managing a search of a person being sought; and
means for providing information about the sought person relating to a received search request in response to a request from the specific search supporting device,
wherein the search supporting devices are set to be capable of requesting information on the sought person if a search instruction is received

16. A search supporting system, comprising a transmitter carried by a sought person, a center side device and a search supporting device possessed by every search manager, wherein:
the center side device comprises:
means for holding a plurality of items of information relating to a sought person and respective security levels in a correlated manner;
means for receiving current position information of a search supporting device and a request for sought person information from the search supporting device;
means for calculating information on a relative positional relationship between a transmitter carried by a sought person and a search supporting device based on current position information of the search supporting device;
means for determining a disclosable security level based on the relative positional relationship information; and
means for providing information about sought persons up to a security level set as disclosable to a requesting search supporting device based on the determination.

17. A search supporting system comprising:
a center side device, and
a plurality of search supporting devices, one of each possessed by each search manager, for acquiring information of persons to be sought from the center side device and providing this information to a search manager, wherein the search supporting devices are provided with means for storing acquired sought person information, and delete the stored sought person information upon receipt of a search completion instruction input from a search manager.

18. The search supporting system of any one of claims 15 to 17, wherein the sought person information contains image information of a portrait information of the sought person.

19. A search supporting device, possessed by a search manager, comprising:
means for detecting its own current position;
means for acquiring current position of a transmitter carried by a sought person;
means for calculating a relative positional relationship of itself and the transmitter based on the detected own current position information and the current position of the transmitter;
means for receiving and storing a plurality of items of information relating to sought persons from a center side together with respective security level attributes; and
means for determining disclosable security levels according to the calculated relative positional relationship and providing to a search manager information, among stored information relating to sought persons, that has been determined as being disclosable.

20. A search supporting device, possessed by a search manager, for acquiring and storing information relating to sought persons, and supporting a search by providing the stored information to a search manager, wherein
if a search manager inputs a search completion instruction, stored information relating to a sought person is deleted.
